# EUROPÄISCHE PATENTSCHRIFT

(11) **EP 0 439 730 B1**
(45) Veröffentlichungstag und Bekanntmachung des Hinweises auf die Patenterteilung: **19.04.1995**
(21) Anmeldenummer: 90123377.5
(22) Anmeldetag: 06.12.1990
(51) Int. Cl.: A21C 3/06

(54) **Verfahren und Gerät zum Aufspulen eines Teigbandes auf eine Haspel**
Method and device for rolling a dough sheet onto a spindle
Procédé et appareil pour enrouler une bande de pâte sur un mandrin

(30) Priorität: 31.01.1990 DE 4002715
(43) Veröffentlichungstag der Anmeldung: 07.08.1991
(73) Patentinhaber: A. FRITSCH GMBH & CO. KG, D-97348 Markt Einersheim (DE)
(72) Erfinder: Bernhardt,Udo, W-8711 Markt Einersheim (DE)
(74) Vertreter: Matschkur, Götz, Lindner Patent- und Rechtsanwälte

(56) Entgegenhaltungen:
- EP-A- 0 238 682
- DE-A- 3 725 090

## Beschreibung

Die Erfindung betrifft ein Verfahren zum Aufspulen eines Teigbandes von einer Teigwalzmaschine auf eine Haspel, an die das Teigband während der Anfangsphase seiner ersten Umwicklungen durch eine oder mehrere Führungsrollen oder -walzen gedrückt wird, die für die nachfolgende Phase seines vollständigen Aufspulens von der Haspel wieder entfernt werden. Ferner betrifft die Erfindung ein Gerät zum Aufspulen eines Teigbandes von einer Teigwalzmaschine auf eine entnehmbar gelagerte Haspel, gemäß erstem Teil des Patentanspruchs 8.

Bei einer bekannten Teigband-Aufhaspelvorrichtung (DE-A 37 25 090) wird nach dem letzten Auswalzdurchgang des Teigbandes zwischen den Druckwalzen einer Teigwalzmaschine dieser Durchgang von einem Abtastmittel erfaßt, und anschließend das Teigband von dem Förderband der Teigwalzmaschine einem weiteren, in der Aufhaspelvorrichtung ausgebildeten Förderband zugeführt. Dieses Förderband umläuft über Umlenk- und Stützrollen die Teighaspel an einem Teil ihres Umfanges. Schließlich ist noch ein drittes Förderband, das in seiner Arbeitslage an der Teighaspel anliegt, zur Förderung des Umwickelns der Teighaspel vorgesehen; es umläuft eine zusätzliche Andrückrolle, die von einer Arbeitslage in eine von der Teighaspel entfernte Ruhelage verstellbar ist.

Hieraus ergibt sich das der Erfindung zugrundeliegende Problem, ein in Konstruktion, Aufbau und Herstellung vereinfachtes und verbilligtes Aufhaspelgerät zu schaffen, welches insbesondere ohne eigene Förderbänder und - damit verbunden - in Arbeits- und Ruhelagen verstellbare Umlenkrollen auskommt; zudem sollen auch in der Phase des anfänglichen Umschlinges bzw. Umwickelns der Haspel mit dem Teigband locker aufeinanderliegende Windungen im Hinblick auf das spätere Abhaspeln geschaffen werden. Zur Lösung dieser Probleme werden bei einem Verfahren mit den eingangs genannten Merkmalen erfindungsgemäß die im Patentanspruch 1 gekennzeichneten Maßnahmen vorgeschlagen.

Die langsame Drehgeschwindigkeit trägt der schwierigen Anfangsphase Rechnung, in der zunächst die Haspel mit ein bis zwei Teigbandwindungen umschlungen werden soll. Wenn diese auf die Teighaspel aufgebracht sind, kann dann ohne weiteres mit einer hohen Drehgeschwindigkeit entsprechend der Fördergeschwindigkeit der Walzmaschine das Teigband vollständig aufgewickelt werden.

Aufgrund der zunächst langsam betriebenen Anfangsphase des erstmaligen Umschlingens der Teigwalze ist es in Weiterbildung der Erfindung möglich, daß das Teigband von dem Förderband einer Teigwalzmaschine unmittelbar auf die Haspel übernommen wird. Besondere Transportmittel, wie z. B. Förderbänder mit Umlenkrollen nach dem oben genannten Stand der Technik, werden mithin eingespart. Die zusätzlich notwendigen Hilfseinrichtungen erschöpfen sich lediglich auf ein oder mehrere Führungsrollen zum Andrücken des Teigbandes an die Haspel. In weiterer Konkretisierung wird in der Anfangs- und Vervollständigungsphase des Aufwickelns die Haspel in eine Stellung gebracht, in der sie auf dem Teig- oder Förderband der Teigwalzmaschine aufliegt und dabei von diesen in Rotation versetzbar ist. Dabei wird sowohl in der Anfangsphase als auch in der Vervollständigungsphase ein außerordentlich lockeres Aufspulen auf die Haspel erreicht, so daß ein nachfolgendes leichtes Abspulen bzw. Abhaspeln gewährleistet ist. In der Praxis hat es sich als zweckmäßig erwiesen, daß die langsame Drehgeschwindigkeit der Haspel (bzw. des Förderbandes) im Bereich von einem Zehntel bis zur Hälfte von deren schneller Drehgeschwindigkeit liegt. So besteht, wenn die Haspel vom Förderband bzw. dessen Antrieb in Rotation versetzt wird, ein Realisierungsbeispiel darin, daß ein polumschaltbarer Antriebsmotor für die langsame Drehgeschwindigkeit auf 1000 U/min. und für die schnelle Drehgeschwindigkeit auf 3000 U/min. geschaltet wird.

Ausgehend von einer Teigwalzmaschine, in der das Teigband auf einem Förderband durch den Spalt gegenüberliegender Druckwalzen hin und hertransportiert wird, wobei der letzte Durchgang des Teigbandes mittels Sensorik erfaßt wird, um daraufhin die Haspel und/oder die oben genannten Führungsrollen in eine Arbeitsposition zu setzen, und die Haspel und/oder die Führungsrollen in ihrer Drehung mit dem Antrieb des Förderbandes gekoppelt sind, besteht eine besondere Ausbildung der Erfindung darin, daß mit Erfassen des letzten Teigband-Durchganges ein erstes vorab eingestelltes Zeitintervall für das Erreichen der Haspel durch das Teigband gestartet wird, und nach Ablauf des ersten Zeitintervalls für die Dauer eines zweiten vorab eingestellten Zeitintervalls der Förderband-Antrieb in die langsame Drehgeschwindigkeit entsprechend der Anfangsphase für die ersten (wenigen) Teigband-Umwicklungen versetzt wird. Der erzielte Vorteil besteht darin, daß die hohe Arbeits- bzw. Fördergeschwindigkeit solange wie möglich, nämlich bis das Teigband bei der Haspel ankommt, beibehalten wird; das nachfolgende Umschalten des Förderbandantriebs für die Dauer des zweiten Zeitintervalls beeinträchtigt die Gesamteffizienz der Teigaufspulanlage in der Regel nicht spürbar. Der genannte Steuerungsablauf basierend auf zwei nacheinander gestarteten Wartezeitintervallen ist übersichtlich strukturiert und mit elektronischen Mitteln einfach zu realisieren.

Die Effizienz der Aufspulanlage bzw. des Aufspulgeräts fördert es, wenn in weiterer Ausbildung dieses Gedankens nach Ablauf des zweiten Zeitintervalls der Förderband-Antrieb in die schnellere Geschwindigkeit versetzt wird, um das zur Verfügung stehende Arbeits- und Fördertempo für den nach der Anfangsphase noch nicht aufgewickelten Teigbandabschnitt auszunutzen. Da sich dabei der Durchmesser des auf die Haspel aufgespulten Teigbandes schnell vergrößert, es ist zweckmäßig, beim Umschalten in die schnellere Geschwindigkeit gleichzeitig die Führungsrollen von ihrer Arbeitsposition in die Ruheposition zu versetzen.

Schließlich besteht eine zweckmäßige Weiterführung der Erfindungsausbildung noch darin, nach Ablauf des zweiten Zeitintervalls ein drittes Zeitintervall laufen zu lassen, mit dessen Ende der Förderband-Antrieb gestoppt und/oder die Anfangsbreite des Spaltes zwischen den Druckwalzen der Teigwalzenmaschine eingestellt wird. Die Dauer des dritten Zeitintervalls bemißt sich dabei nach der Länge und dem Tempo des mit schneller Geschwindigkeit aufzuwickelndem restlichen Teigbandes; es wird vorteilhaft mit Durchgang des Teigband-Endes durch die Druckwalzen gestartet.

Zur Lösung des eingangs genannten Problems wird im Rahmen der Erfindung auch bei dem eingangs genannten Aufspul-Gerät die im Patentanspruch 8 gekennzeichneten Merkmale vorgeschlagen. Anders als beim oben genannten Stand der Technik besteht beim erfindungsgemäßen Gerät nicht mehr die Notwendigkeit, besondere Transportmittel wie Förderbänder nebst zugehöriger Verstelleinrichtungen zwischenzuschalten; vielmehr kann so das Teigband unmittelbar auf die Haspel gelangen, unter Hilfestellung durch ein oder mehrere Führungsrollen in Arbeitsposition, in der sie das Teigband um die Haspel leiten.

Zur Realisierung der Verstellbarkeit der Führungsrollen ist in Weiterbildung der Erfindung vorgesehen, den Verstellsupport mit zwei einander gegenüberliegend angelenkte Lagerschilde zu versehen, die zwischen sich die Führungsrollen drehbar tragen; zu ihrer Verschwenkung in die Arbeits- oder Ruhestellung sind sie mit einer motorisch angetriebenen Schwenkeinrichtung gekoppelt. Die Lagerschilde können beispielsweise an einem Rahmenteil des Verstellsupports angebracht sein.

Nach einer besonderen Ausbildung ist zur Realisierung der Schwenkeinrichtung eine durch einen (gesteuerten) Antrieb drehbare Exzenterscheibe vorgesehen, die bei Antrieb ein exzentrisches Kreisbahnprofil durchläuft, aufgrund dessen ein Stössel in seiner Längsachse bewegt wird, und dabei über sein Ende ein Lagerschild verschwenkt.

Dabei stellt sich das Problem, die Exzenterbewegungen zwecks Herbeiführung der Arbeits- und Ruhepositionen der Führungsrollen einer Kontrolle durch ein externes Steuerungssystem zugänglich zu machen. Dem wird mit einer Erfindungsausbildung begegnet, wonach die Exzenterscheibe mit einem Stellungs- bzw. Positionsgeber gekoppelt und/oder einstückig ausgebildet ist, der Tastobjekte bzw. -einrichtungen aufweist, die von stationär angeordneten Positionsschaltern für die Arbeits- und Ruheposition abtastbar sind.

Ein für das erfindungsgemäße Aufspulgerät vorgesehenes Steuerungssystem, welches nach Erfassen der letzten Teigwalzphase (letzter Durchgang des Teigbandes durch die gegenüberliegenden Druckwalzen) einen Antrieb betätigt, der die Haspel und/oder die Führungsrollen in ihre Arbeits- und Ruhepositionen bringt, erzeugt auf der Basis der Erfindung ein erstes und/oder zweites Ausgangssignal für den Antrieb des Förderbandes der Walzmaschine, um diesen von einer hohen auf eine niedrige Fördergeschwindigkeit und umgekehrt einzustellen und/oder ein- bzw. auszuschalten. Hierdurch kann die für das erfindungsgemäße Verfahren wesentliche Umschaltung auf die langsame Aufspulgeschwindigkeit für die anfängliche Umwickelphase bewerkstelligt werden.

Um nach Beendigung bzw. Vervollständigung des Aufspulvorganges die Walzmaschine wieder in ihren Ausgangszustand für das nächste Teigband zu versetzen, ist nach einer zweckmäßigen Weiterbildung vorgesehen, daß das Steuerungssystem ein (weiteres) Ausgangssignal für den Antrieb zur Verstellung des Spaltes gegenüberliegender Druckwalzen der Teigwalzmaschine generiert, um die Druckwalzen-Anordnung in ihre Ausgangsstellung zurücksetzen zu können.

Insbesondere um das oben genannte erste Zeitintervall zur rechtzeitigen Umschaltung des Förderband-Antriebs auf seine langsame Geschwindigkeit zu realisieren, ist in das Steuerungssystem ein erstes Zeitgebermodul implementiert,
welches ein Zeitintervall entsprechend dem Zeitraum von der letzten Teigwalzphase bis zur anfänglichen Teigbandübernahme durch die Haspel erzeugt; um vor allem die (langsame) Aufspul-Anfangsphase so bald wie möglich wieder beenden zu können, ist noch ein zweites Zeitgebermodul realisiert,
welches ein Zeitintervall entsprechend dem Zeitraum von der anfänglichen Teigband-Übernahme durch die Haspel bis zur Verstellung der Führungsrollen von deren Arbeitsposition in deren Ruheposition erzeugt. Dieses zweite Zeitintervall ist zweckmäßig so bemessen, daß nach dessen Ablauf die Haspel mit etwa ein bis drei Teigband-Windungen umschlungen ist.

Damit nach Beendigung der (langsamen) anfänglichen Aufspulphase die folgende Vervollständigungsphase mit möglichst hohem Teigband-Durchsatz erfolgt, ist in das Steuerungssystem vorteilhaft noch ein drittes Zeitgebermodul integriert, das der Erzeugung eines Zeitintervalls entsprechend dem Zeitraum von der Beendigung der letzten Teigwalzphase, also wenn das Teigband-Ende gerade den Druckwalzen-Spalt verläßt, bis zur Beendigung des Aufspulvorganges auf die Haspel dient; hiernach ist in der Regel der Förderband-Antrieb abzuschalten und die Druckwalzenanordnung durch einen gesonderten Antrieb in ihre Ausgangsstellung zurückzuversetzen, um eine neue Teigbearbeitung zur Ausbildung eines Teigbandes beginnen zu lassen.

Der Erhöhung der Arbeits- und Betriebssicherheit dient es, wenn das Steuerungssystem des erfindungsgemäßen Aufspulgerätes mit einem Sensor, beispielsweise einen Druck- oder Berührungsschalter versehen ist, der erfaßt, ob eine Haspel in das Aufspulgerät eingelegt ist oder nicht. Ist jedenfalls bei Beginn der letzten Teigwalzphase noch keine Haspel eingelegt, unterbricht das Steuerungssystem den weiteren Arbeitsablauf und gibt eine Fehlermeldung aus.

Weitere Merkmale, Einzelheiten und Vorteile der Erfindung ergeben sich aus der nachfolgenden Beschreibung eines bevorzugten Ausführungsbeispiels der Erfindung sowie anhand der Zeichnung. Darin zeigen:
- Fig. 1: in Seitenansicht eine an sich bekannte Teigwalzmaschine mit einem erfindungsgemäßen Teigaufspulgerät,
- Fig. 2: eine vergrößerte Seitenansicht des Teigaufspulgeräts gemäß Fig. 1 in Ruheposition,
- Fig. 3: eine vergrößerte Seitenansicht des Teigaufspulgeräts gemäß Fig. 1 in Arbeitsposition,
- Fig. 4: in entgegengesetzter Seitenansicht den Antrieb für die Führungsrollen des Teigaufspulgeräts gemäß Fig. 1 bis 3,
- Fig. 5: eine Anordnung für ein Steuerungssystem des erfindungsgemäßen Teigaufspulgeräts, und
- Fig. 6: ein Flußdiagramm eines erfindungsgemäßen Steuerungsablaufes.

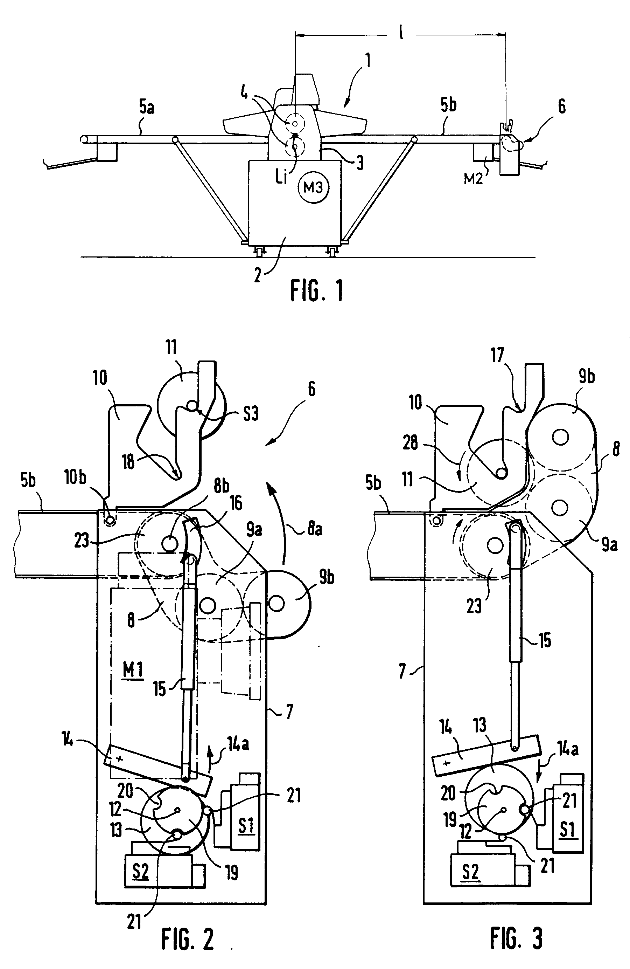

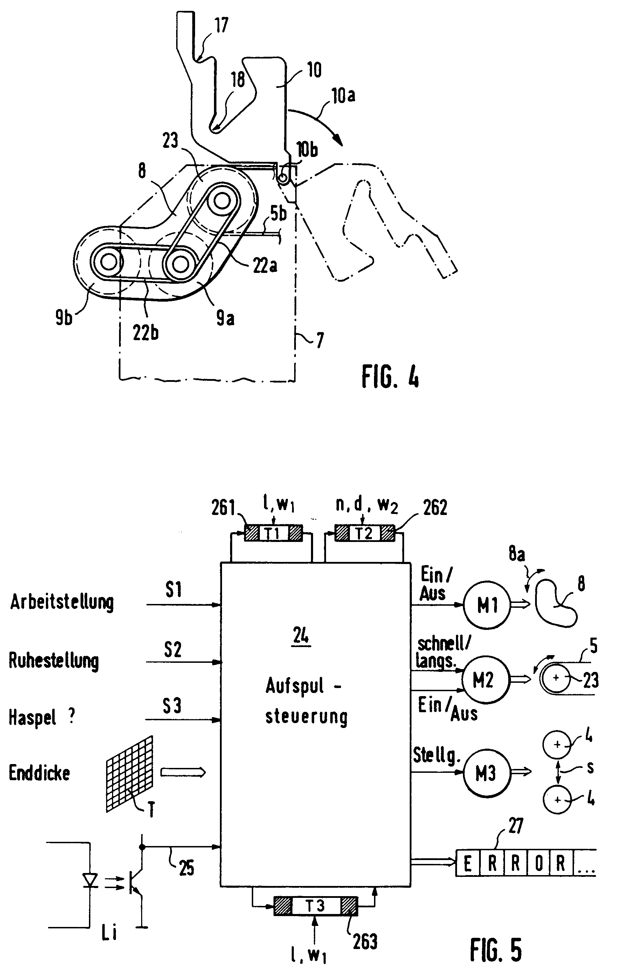

Bei der Teigwalzmaschine 1 nach Fig. 1 sind in einem auf einem Wagen 2 aufgesetzten Gehäuse 3 zwei einander gegenüberliegende Druckwalzen 4 angeordnet. Sie begrenzen zusammen einen über einen Antriebsmotor M3 veränderlichen Spalt s (vgl. Fig. 5), durch den Teig abwechselnd von jeder Seite mittels der beidseitigen Förderbänder 5a, 5b hindurchgelangt, um hieraus ein Teigband auszuwalzen. Ob sich das Teigband gerade im Spalt s befindet, kann mittels einer schematisch angedeuteten Lichtschranke Li als Abtasteinrichtung festgestellt werden. Am von den Druckwalzen 4 abgewandten Ende eines der Förderbänder 5, im in Fig. 1 gezeichneten Beispiel am von den Druckwalzen 4 rechts angeordneten Förderband 5b, ist - in Fig. 1 schematisch angedeutet - das Teigaufspulgerät 6 angebracht; natürlich kann es auch am entgegengesetzten Ende der Teigwalzmaschine 1, d. h. am äußeren Ende des anderen Förderbandes 5a angebracht sein.

Gemäß Fig. 2 besteht das erfindungsgemäße Teigaufspulgerät 6 aus einem Traggehäuse 7, das einen Antriebsmotor M1 und eine mit diesem gekoppelte Schwenkeinrichtung mit zugehörigen Stellungsschaltern S1, S2 umfaßt, aus an beiden Seiten des Förderbandes angeordnete gegenüberliegende Lagerschilde 8 für Führungsrollen 9a, 9b und aus ebenfalls beidseitig angebrachten Aufnahmeplatten 10 für die Aufspul-Haspel 11. Die Lagerschilde 8 und die Aufnahmeplatten 10 sind jeweils um eine (horizontale) Achse senkrecht zur Zeichenebene an dem Traggehäuse 7 angelenkt. Mithin verlaufen ihre Schwenkrichtungen 8a (vgl. Fig. 2) und 10a (vgl. Fig. 4) jeweils in einer vertikalen Ebene um durch die Gelenkstellen 8b bzw. 10b führende horizontale Achsen.

Der Antriebsmotor M1 treibt eine zu seiner Mittelachse exzentrisch drehgelagerte Exzenterscheibe 13, auf deren Umfang ein am Traggehäuse 7 angelenkter Hebel 14 - durch die Exzenterbewegungen in Schwenkrichtung 14a bewegbar - auf liegt. An ihm ist das Ende einer Hubstange 15 befestigt, deren entgegengesetztes Ende - in einem Führungsschlitz 16 des Traggehäuses 7 geführt - mit einem oder beiden Lagerschilden 8 zu deren Verschwenkung 8a nach oben starr verbunden ist. Wird durch Drehung der Exzenterscheibe 13 der aufliegende Hebel 14 in Schwenkrichtung 14a nach oben bewegt, bewegt sich das im Führungsschlitz 16 befindliche Ende der Hubstange 15 entsprechend nach oben und verschwenkt dabei die Lagerschilde 8 mit zwischen diesen aufgenommenen Führungsrollen 9a, 9b in Richtung 8a zu den Aufnahmeplatten 10. In diesen sind sowohl eine kleine Aussparung 17 als auch eine große Aussparung 18 ausgebildet, die jeweils nach oben offen sind, um darin die Haspel 11 von oben mit Spiel einsetzen zu können. In der in Fig. 2 gezeigten Ruhe- bzw. Ausgangsstellung ist die Haspel 11 zunächst in der gegenüber der große Aussparung 18 höher gelegenen kleinen Aussparung 17 eingelegt. Ein (schematisch in Fig. 2 angedeuteter) Berührungsschalter S3 kann dabei die etwaige Anwesenheit der Haspel 11 in der Aufnahmeplatte 10 sensieren. Die Exzenterscheibe 13 ist mit einer als Positions- bzw. Stellungsgeber dienenden Steuerscheibe 19 gekoppelt, so daß die Bewegungen beider miteinander synchronisiert sind. Die Steuerscheibe 19 weist an ihrem Umfang Ausnehmungen 20 auf, die Tastobjekte für die zugeordneten Stellungsschalter S1, S2 bilden. Diese sind jeweils mit einem federnd abstehenden Tastkörper 21 ausgerüstet, die gegen den Umfang der Steuerscheibe 20 drücken und bei deren Rotation synchron mit der Exzenterscheibe 13 gegebenenfalls in eine der Tastausnehmungen 20 einrücken. Dabei wird der entsprechende Schalter S1 bzw. S2 betätigt. Gemäß Fig. 2 ist dies für den Schalter S2 der Fall, welcher an ein Steuerungssystem (vgl. Fig. 5) dann anzeigt, daß sich die Führungsrollen 9a, 9b in ihrer von der Haspel 11 entfernten Ruheposition befinden.

Gemäß Fig. 3 ist der Tastkörper 21 des die Arbeitsstellung anzeigenden Schalters S1 in eine der Tastausnehmungen eingerückt. Dementsprechend befindet sich der Hebel 14 sowie die Hubstange 15 jeweils in einer nach oben gehobenen Stellung, wodurch die Lagerschilde 8 mit den dazwischen verlaufenden Führungsrollen 9a, 9b nach oben gehoben bzw. verschwenkt sind. Dabei - mit Vollendung der Schwenkbewegung 8a gemäß Fig. 2 - haben sie die zunächst in die kleine Aufnahme-Aussparung 17 eingelegte Haspel 11 von dort aus in die große Aufnahmeaussparung 18 gestoßen. Die Haspel 11 sowie die Führungsrollen 9a, 9b begrenzen zusammen jeweils Führungsspalte für auf die Haspel 11 aufzuwickelndes Teigband.

Fig. 4 gibt Teile des Aufspulgerätes 6 in einer Seitenansicht wieder, die der nach Fig. 2 und 3 entgegengesetzt ist. Gemäß Fig. 4 sind die zwischen den Lagerschilden 8 angeordneten Führungsrollen 9a, 9b antriebsmäßig über jeweilige Antriebsriemen 22a, 22b mit der Antriebswalze 23 des Förderbandes 5b gekoppelt. Die Aufnahmeplatte 10 die in Schwenkrichtung 10a um das Gelenk 10b am Traggehäuse 7 verschwenkbar ist, ist in der verschwenkten Stellung strichpunktiert dargestellt.

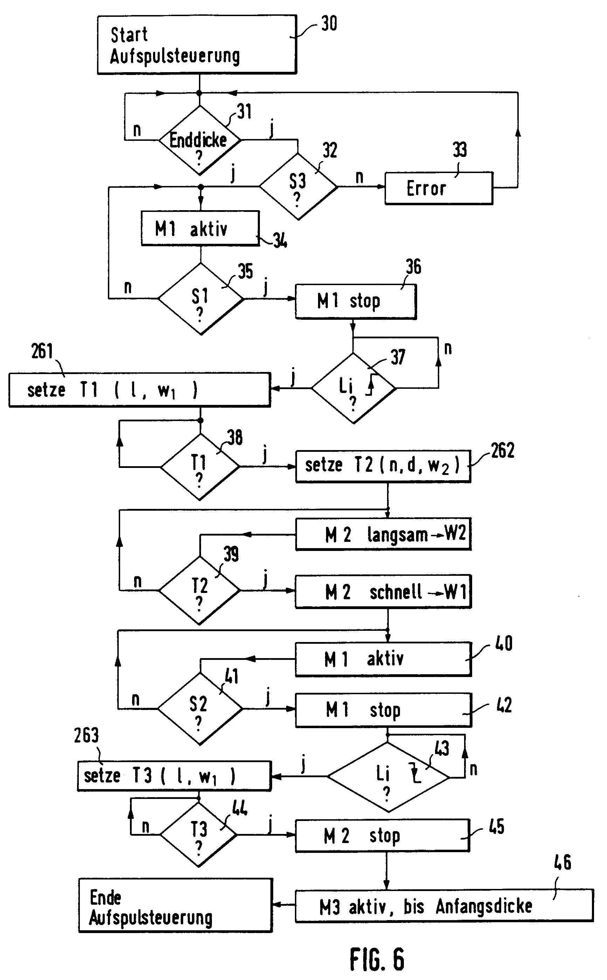

Gemäß Fig. 5 ist zur Realisierung des Aufspulablaufs (vgl. Fig. 6) ein Steuerungssystem 24 vorgesehen, welches eingangsseitig mit den Schaltern S1 bzw. S2 für die Arbeits- bzw. Ruhestellung der Führungswalzen 9a, 9b, mit dem Sensor S3 zur Detektion der Anwesenheit einer Haspel in der Aufnahmeplatte 10, mit der Eingabe-Tastatur T für die Teigband-Enddicke aufgrund des von den beiden Druckwalzen 4 gebildeten Spaltes s und mit dem Ausgang 25 der Lichtschranke Li verbunden ist, welche das im Spalt s befindliche Teigband abtastet. An seiner Ausgangsseite erzeugt das Steuerungssystem 24 ein Ein/Aus-Signal für den Antriebsmotor M1 zur Verschwenkung 8a des Lagerschildes 8, ein weiteres Ein/Aus-Signal sowie ein Schnell/Langsam-Signal für den Antriebsmotor M2, der die Antriebswalze 23 des Förderbandes 5 in Rotation versetzt, und schließlich gemäß gezeichneten Ausführungsbeispiel ein Stellungssignal für einen Antriebsmotor M3, der zur Verstellung der Spaltdicke zwischen den Druckwalzen 4 auf eine dieser beiden einwirkt. Ferner sind zur Realisierung von Verzögerungszeiten für den Steuerungsablauf Zeitgebermodule 261 bis 263 in das Steuerungssystem integriert: Sie erzeugen jeweils Zeitintervalle T1, T2 bzw. T3, die Umgebungsparametern wie der Länge 1 eines der Förderbänder 5a, 5b und der schnellen und langsamen Dreh-Fördergeschwindigkeit W1 bzw. W2 der Antriebswaldze 23 eines der Förderbänder 5a, 5b, der Anzahl n der in der Anfangsphase vorgesehenen Wicklungen des Teigbandes um die Haspel 11 sowie deren Durchmesser d entsprechen.

Eine Möglichkeit, die genannten Eingangssignale zusammen mit den Zeitintervallen zur Erzeugung der Ausgangssignale logisch und mit bestimmten Verzögerungen zu verknüpfen, ist im Flußdiagramm gemäß Fig. 6 verdeutlicht: Nach Aufruf einer Prozedur "Aufspulsteuerung" wird für eine Verzweigung 31 abgefragt, ob zwischen den Druckwalzen 4 für den Spalt s die Enddicke erreicht ist. Solchenfalls wird über eine weitere Verzweigung 32 zur Sicherheit geprüft, ob eine Haspel 11 in die Aufnahmeplatte 10 eingelegt ist; hierzu kann das Signal des Sensors S3 abgefragt werden. Ist trotz Erreichen der Enddicke noch keine Haspel eingelegt, wird vom Steuerungssystem eine Error-Routine 33 zur Warnung und/oder Fehlermeldung über ein Display 27 od. dgl. (vgl. Fig. 5) ausgegeben. Andernfalls wird der Antriebsmotor M1 für die Lagerschilde 8 zu deren Verschwenkung 8a zur Haspel 11 hin solange aktiviert (vgl. Funktionsblock 34), bis der Stellungsschalter S1 anhand der Steuerscheibe bzw. des Positionsgebers 19 das Erreichen der Arbeitsstellung gemäß Fig. 3 ertastet hat. Dies ist gemäß Fig. 6 programmtechnisch mittels der Verzweigung 35 realisiert. Wird der Schalter S1 durch Erreichen der Arbeitsposition gemäß Fig. 3 betätigt, wird die Warteschleife beendet, und die Verzweigung 35 leitet zum Funktionsblock 36, der zum Anhalten des Antriebsmotors M1 führt. Dann wird mittels der Verzweigung 37 solange gewartet, bis die Lichtschranke Li das Eintreten eines Teigbandes in den Spalt s zwischen den Druckwalzen 4 an das Steuerungssystem 24 meldet. Daraufhin ist die Aktivierung des ersten Zeitgebermoduls 261 vorgesehen, der unter Berücksichtigung der Förderbandlänge 1 (vgl. Fig. 1) und der hohen Drehgeschwindigkeit W1 der Förderbandantriebswalze 23 ein Zeitintervall T1 erzeugt. Nach dessen Ende erfolgt eine Verzweigung 38 zum Aufsetzen des zweiten Zeitgebermoduls 262, der unter Berücksichtigung der anhand von Fig. 5 erläuterten Umgebungsparameter n, d, W2 ein entsprechend langes zweites Zeitintervall T2 generiert. Für dessen Dauer wird der Antriebsmotor M2 für die Antriebswalze 23 von der (vorher) schnellen Geschwindigkeit W1 auf seine langsame Geschwindigkeit W2 geschaltet. Die Führungsrollen 9a, 9b befinden sich dann schon in der in Fig. 3 gezeigten Stellung und das auf dem Förderband 5b ankommende Teigband kann von dort aus unmittelbar und aufgrund der sicheren Führung durch die Führungsrollen 9a, 9b auf die Haspel 11 gelangen. Das zweite Zeitintervall T2 ist zweckmäßig so eingestellt, daß für etwa n = 1 - 3 Umwicklungen des Teigbandes um die Haspel 11 die Antriebswalze 23 und deren Motor M2 die langsame Ansrollgeschwindigkeit W2 erzeugt. Nach Ablauf des Zeitintervalls T2 wird über die Verzweigung 39 der Antriebsmotor M2 für die Antriebswalze 23 wieder in seine schnelle Geschwindigkeit W1 geschaltet, um das mit den n Umwicklungen begonnene Aufspulen zu vervollständigen. Da nun das Teigband um die Haspel 11 sicher gefädelt ist, und mit zunehmenden Aufspul-Durchmesser die Führungsrollen 9a, 9b stören würden, wird gemäß Funktionsblock 40 in Fig. 6 der Antriebsmotor M1 zum Verschwenken der Lagerschilde 8 solange aktiviert (vgl. Verzweigung 41), bis der Stellungsschalter S2 bei Erreichung der Ruhestellung durch das Lagerschild 8 mit zugehörigen Führungsrollen 9a, 9 durch den Positionsgeber 19, 20 betätigt wird. Daraufhin wird - gemäß Funktionsblock 42 - der Antriebsmotor M1 wiederangehalten. Sobald die Lichtschranke Li wieder das Verlassen des Spaltes s der Druckwalzen 4 durch das Teigband detektiert (vgl. Verzweigung 43), wird das Zeitgebermodul 263 aufgerufen. Das daraus resultierende Zeitintervall T3 beeinflußt von der Länge 1 eines der Förderbänder 5a, 5b und/oder der schnellen Dreh- bzw. Fördergeschwindigkeit W1, ist nach der Zeitdauer bemessen, die vom Verlassen des Druckwalzen-Spaltes s durch das Teigband bis zur Vervollständigung seines Aufspulens auf die Haspel 11 vergeht. Da während diesem dritten Zeitintervall T3 mit der schnellen Fördergeschwindigkeit W1 gefahren wird, ist dadurch die Gesamt-Aufspulgeschwindigkeit optimiert. Nach Ablauf des-Zeitintervalls T3 (vgl. Verzweigung 44) erfolgt ein Anhalten des Förderband-Antriebsmotors M2 (vgl. Funktionsblock 45) sowie ein Rücksetzen der Anordnung der Druckwalzen 4 mittels eines Antriebsmotors M3 im Wagen 2 der Walzmaschine 1 (vgl. Fig. 1), bis die Spaltdicke s ihren Anfangs- bzw. Ausgangswert erreicht hat (vgl. Funktionsblock 46).

## Patentansprüche

1. Verfahren zum Aufspulen eines Teigbandes von einer Teigwalzmaschine (1) auf eine Haspel (11), an die das Teigband während der Anfangsphase (38, 262, 39) seiner ersten Umwicklungen (n) durch eine oder mehrere Führungsrolle(n) (9a, 9b) oder -walze(n) gedrückt wird, die für die nachfolgende Phase (39, 40, 41, 42, 43, 44) seines vollständigen Aufspulens von der Haspel (11) wieder entfernt werden, dadurch gekennzeichnet, daß die Haspel (11) während der Anfangsphase langsam (W2) und während der Vervollständigungsphase schnell (W1) gedreht wird, wobei die Drehgeschwindigkeit (W2) der Haspel (11) der Geschwindigkeit eines Förderbandes (5b) der Teigwalzmaschine (1) entspricht und die Geschwindigkeit des Förderhandes (5b) während der Anfangsphase (38, 262, 39) auf langsam und während der Vervollständigungsphase (39, 40, 41, 42, 43, 44) auf schnell geschaltet wird.

2. Verfahren nach Anspruch 1, dadurch gekennzeichnet, daß das Teighand vom Förderhand (5b) der Teigwalzmaschine (1) unmittelbar auf die Haspel (11) übernommen wird.

3. Verfahren nach Anspruch 2, dadurch gekennzeichnet, daß die Haspel (11) in der Anfangs- und Vervollständigungsphase (38 - 45) in eine Stellung (Fig. 3) gebracht wird, in der sie auf dem Teig- und/oder Förderband (5b) der Teigwalzmaschine (1) von diesen rotierbar (28) aufliegt.

4. Verfahren nach einem der vorherigen Ansprüche, dadurch gekennzeichnet, daß die langsame Drehgeschwindigkeit (W2) der Haspel (11) im Bereich von einem Zehntel bis zur Hälfte von deren schneller Drehgeschwindigkeit (W1) liegt.

5. Verfahren nach einem der vorherigen Ansprüche, wobei das Teighand vom Förderhand (5) einer gegenüherliegende Druckwalzen (4) aufweisenden Teigwalzmaschine (1) aus aufgespult wird, der letzte Durchgang des Teigbandes durch den Spalt (s) der Druckwalzen (4) erfaßt (Li) wird, um die Haspel (11) und/oder die Führungsrollen in eine Arbeitsposition (Fig. 3) zu setzen, und die Haspel (11) und/oder die Führungsrollen (9a, 9b) in ihrer Drehung mit dem Antrieb des Förderhandes (M2, 23) gekoppelt sind, dadurch gekennzeichnet, daß mit Erfassen des letzten Teigband-Walzgangs (37) ein erstes eingestelltes Zeitintervall (T1) für das Erreichen der Haspel (11) durch das Teighand gestartet wird, und nach Ablauf (38) des ersten Zeitintervalls (T1) für die Dauer eines zweiten Zeitintervalls (T2) der Förderband-Antrieb (M2) in die langsame Drehgeschwindigkeit (W2) entsprechend der Anfangsphase (38, 39) versetzt wird.

6. Verfahren nach Anspruch 5, dadurch gekennzeichnet, daß nach Ablauf (39) des zweiten Zeitintervalls (T2) der Förderband-Antrieb (M2) in die schnelle Drehgeschwindigkeit (W1) entsprechend der Aufspul- und Vervollständigungsphase (39 - 44) und/oder die Führungsrollen (9a, 9b) von ihrer Arbeitsposition (Fig. 3) in eine von der Haspel (11) entfernte Ruheposition (Fig. 2) versetzt werden.

7. Verfahren nach Anspruch 5 oder Anspruch 6, gekennzeichnet durch ein nach Ablauf (39) des zweiten Zeitintervalls (T2) gestartetes drittes Zeitintervall (T3), nach dessen Ablauf (44) der Förderband-Antrieb (M2) gestoppt (45) und/oder die Anfangsbreite des Spaltes (s) zwischen den Druckwalzen (4) eingestellt (46) wird.

8. Gerät zum Aufspulen eines Teigbandes von einer Teigwalzmaschine (1) auf eine entnehmhar gelagerte Haspel (11), mit einem am Ende eines Förderbandes (5b) der Teigwalzmaschine (1) anbringbaren Traggehäuse (7), einer am Traggehäuse (7) montierten Haspel-Aufnahmevorrichtung (10) mit Aufnahmeelementen, beispielsweise Aussparungen (17, 18) in gegenüberliegenden Aufnahmeplatten (10), in denen die Haspel (11) frei drehbar (28) gelagert ist, und mit einer oder mehreren, in einem ebenfalls am Traggehäuse (7) angeordneten Verstellsupport gelagerten Führungsrolle(n) (9a, 9b), die mittels des Verstellsupports in eine von der Haspel entfernte Ruheposition (Fig. 2) oder in eine Arbeitsposition (Fig. 3) zum Schlagen des Teigbands um die Haspel (11) bringbar ist beziehungsweise sind, dadurch gekennzeichnet, daß die Haspel (11) zumindest dann, wenn sich die eine oder mehreren Führungsrolle(n) (9a, 9b) in der Arbeitsposition (Fig. 3) befinden, auf dem Teigband aufliegend gelagert ist, das auf dem Förderband (5b) der Teigwalzmaschine (1) ankommt.

9. Gerät nach Anspruch 8, dadurch gekennzeichnet, daß der Verstellsupport zwei gegenüberliegend angelenkte, die Führungsrollen (9a, 9b) zwischen sich drehbar tragende Lagerschilde (8) aufweist, die zu ihrer Verschwenkung (8a) in die Arbeits- oder Ruhestellung mit einer motorisch angetriebenen (M1) Schwenkeinrichtung (13, 14, 15) gekoppelt sind.

10. Gerät nach Anspruch 9, dadurch gekennzeichnet, daß die Schwenkeinrichtung eine motorisch gedrehte Exzenterscheibe (13) und einen durch diese längsbewegbaren Stößel (15) aufweist, der mit dem Lagerschild (8) zur Verschwenkung (8a) verbunden ist.

11. Gerät nach Anspruch 10, gekennzeichnet durch einen mit der Exzenterscheibe (13) gekoppelten und/oder einstückig ausgebildeten Positionsgeber (19) mit Tastobjekten (20), die von stationär angeordneten Positionsschaltern (S1, S2) für die Arbeits- und Ruheposition (Fig. 2, Fig. 3) erfaßbar sind.

12. Gerät nach einem der Ansprüche 8 bis 11, mit einem Steuerungssystem (24), welches nach Erfassen der letzten Teigwalzphase (37) einen Antrieb (M1) betätigt, der die Haspel (11) und/oder die Führungsrollen (9a, 9b) in ihre Arheits- und Ruhestellung bringt, dadurch gekennzeichnet, daß das Steuerungssystem (24) ein erstes und/oder zweites Ausgangssignal für den Förderband-Antrieb (M2) generiert, um diesen von einer hohen auf eine niedrige Fördergeschwindigkeit (W1, W2) und umgekehrt einzustellen und/oder ein- bzw. auszuschalten.

13. Gerät nach Anspruch 12, dadurch gekennzeichnet, daß das Steuerungssystem (24) ein Ausgangssignal für den Antrieb (M3) zur Verstellung des Spaltes (s) gegenüberliegender Druckwalzen (4) der Teigwalzmaschine (1) generiert, um diese Anordnung in eine Ausgangsstellung zurückzuversetzen (46).

14. Gerät nach Anspruch 12 oder 13, dadurch gekennzeichnet, daß das Steuerungssystem (24) ein erstes Zeitgebermodul (261), welches ein Zeitintervall (T1) entsprechend dem Zeitraum von der letzten Teigwalzphase (37) bis zur anfänglichen Teigband-Übernahme (38) durch die Haspel (11) erzeugt, und ein zweites Zeitgebermodul (262) aufweist, welches ein Zeitintervall (T2) entsprechend dem Zeitraum von der anfänglichen Teighand-Übernahme (38) bis zur Verstellung (40, 41) der Führungsrollen (9a, 9b) von deren Arbeitsposition (Fig. 3) in deren Ruheposition (Fig. 2) erzeugt.

15. Gerät nach Anspruch 14, gekennzeichnet durch ein drittes Zeitgebermodul (263) für das Steuerungssystem (24), zur Erzeugung eines Zeitintervalls (T3) entsprechend dem Zeitraum von der Beendigung (44) der letzten Teigwalzphase (37) bis zur Beendigung des Aufspulvorganges auf die Haspel (11), um nach diesem Zeitintervall (T3) den Förderband-Antrieb um- oder abzuschalten (45) und/oder das Ausgangssignal gemäß Anspruch 13 zu erzeugen (46).

16. Gerät nach Anspruch 12, 13, 14 oder 15, dadurch gekennzeichnet, daß das Steuerungssystem (24) mit einem Sensor (S3) für die Haspel (11) im Aufspulgerät (6) verbunden ist.

17. Gerät nach einem der Ansprüche 8 bis 16, verwendet zur Durchführung des Verfahrens nach einem der Ansprüche 1 bis 7.

## Claims

1. Method and device for winding a dough strip from a dough rolling machine (1) on to a reel (11), on to which the dough strip is pressed during the starting phase (38, 262, 39) of its first turns (n) by one or more guide pulleys (9a, 9b) or rollers, which are removed again from the reel (11) for the following phase (39, 40, 41, 42, 43, 44), characterised in that the reel (11) is rotated slowly (W2) during the starting phase and rapidly (W1) during the completion phase, the speed of rotation (W2) of the reel (11) corresponding to the speed of a conveyor belt (5b) of the dough rolling machine (1) and the speed of the conveyor belt (5b) is switched to slow during the starting phase (38, 262, 39) and to fast during the completion phase (39, 40, 41, 42, 43, 44).

2. Method according to claim 1, characterised in that the dough strip is transferred from the conveyor belt (5b) of the dough rolling machine (1) directly on to the reel (11).

3. Method according to claim 2, characterised in that the reel (11) is moved into a position (Fig. 3) in the starting and completion phases (38 - 45) in which it rests on the dough strip and/or on the conveyor belt (5b) of the dough rolling machine (1) so as to be rotated (28) thereby.

4. Method according to one of the preceding claims, characterised in that the slow speed of rotation (W2) of the reel (11) is in the region of one tenth to half of the faster speed of rotation (W1).

5. Method according to one of the preceding claims, wherein the dough strip is spooled from the conveyor belt (5) of a dough rolling machine (1) having opposing pressure rollers (4), the last passage of the dough strip through the gap (s) of the pressure rollers (4) is scanned (Li) in order to move the reel (11) and/or the guide pulleys (9a, 9b) into an operating position (Fig. 3), and the reel (11) and/or the guide pulleys (9a, 9b) are coupled in rotation to the drive of the conveyor belt (M2, 23), characterised in that when the last passage (37) of the dough strip through the rollers is scanned, a first set time interval (T1) for the dough strip to reach the reel (11) is started, and after expiry (38) of the first time interval (T1), the conveyor belt drive (M2) is switched over to the slow speed (W2) corresponding to the starting phase (38, 39) for the duration of a second time interval (T2).

6. Method according to claim 5, characterised in that when the first time interval (T2) has expired (39), the conveyor belt drive (M2) is switched over to the fast speed (W1) corresponding to the winding on and completion phase (39 - 44) and/or the guide pulleys (9a, 9b) are displaced from their operating position (Fig. 3) into a rest position (Fig. 2) remote from the reel (11).

7. Method according to claim 5 or claim 6, characterised by a third time interval (T3), which starts after expiry (39) of the second time interval (T2) and after the expiry (44) of which the conveyor belt drive (M2) is halted (45) and/or the starting breadth of the gap (s) between the pressure rollers (4) is adjusted (46).

8. Device for winding a dough strip from a dough rolling machine (1) on to a detachably mounted reel (11), having a support housing (7) mountable at one end of a conveyor belt (5b) of the dough rolling machine (1), a reel holder (10) mounted on the support housing (7) and having receiving elements, e.g. cut-outs (17, 18) in opposing receiving plates (10), in which the reel (11) is freely rotatably (28) mounted, and having one or more guide pulleys (9a, 9b) mounted in a displacement support also mounted on the support housing (7), said guide pulleys being movable by means of the displacement support into a rest position (Fig. 2) remote from the reel or an operating position (Fig. 3) for wrapping the dough strip around the reel (11), characterised in that the reel (11) is mounted so as to rest, at least when the one or more guide pulleys (9a, 9b) is or are in the operating position (Fig. 3), on the dough strip arriving on the conveyor belt (5b) of the dough rolling machine (1).

9. Device according to claim 8, characterised in that the displacement support has two opposite bearing plates (8), which are coupled together and support pivotably between them the guide pulleys (9a, 9b), said bearing plates being coupled to a motor-driven (M1) pivoting device (13, 14, 15) for pivoting (8a) into the operating or rest position.

10. Device according to claim 9, characterised in that the pivoting device has a rotary motor-driven cam disc (13) and a ram (15) movable longitudinally thereby and connected to the bearing plate (8) for pivoting (8a).

11. Device according to claim 10, characterised by a position indicator (19) coupled to the cam disc (13) and/or formed integrally therewith, having scanning subjects (20), which are detectable by positioning switches (S1, S2) mounted in a fixed manner for selecting the operating and rest positions (Fig. 2, Fig. 3).

12. Device according to one of claims 8 to 11, having a control system (24), which after detection of the last dough rolling phase (37) actuates a drive (M1) which moves the reel (11) and/or the guide pulleys (9a, 9b) into their operating or rest position, characterised in that the control system (24) generates a first and/or second output signal for the conveyor belt drive (M2) in order to switch same from a high to a low conveying speed (W1, W2) and *vice versa* and/or to switch the drive on or off.

13. Device according to claim 12, characterised in that the control system (24) generates an output signal for the drive (M3) for adjusting the gap (s) of opposing pressure rollers (4) of the dough rolling machine (1) in order to reset (46) the apparatus to its starting position (46).

14. Device according to claim 12 or 13, characterised in that the control system (24) has a first timer module (261), which generates a time interval (T1) corresponding to the duration from the last dough rolling phase (37) to the initial dough strip transfer (38) by way of the reel (11), and a second timer module (262), which generates a time interval (T2) corresponding to the duration from the initial dough strip transfer (38) up to displacement (40, 41) of the guide rollers (9a, 9b) from their operating position (Fig. 3) into their rest position (Fig. 2).

15. Device according to claim 14, characterised by a third timer module (263) for the control system (24) for generating a time interval (T3) corresponding to the duration from the end (44) of the last dough rolling phase (37) to the end of winding on to the reel (11), in order after this time interval (T3) to switch the conveyor belt drive over or off (45) and/or to generate the output signal according to claim 13.

16. Device according to claim 12, 13, 14 or 15, characterised in that the control system (24) is connected to a sensor (S3) for the reel (11) in the winding-on device (6).

17. Device according to one of claims 8 to 16, used to carry out the process according to one of claims 1 to 7.

## Revendications

1. Procédé pour l'enroulement d'une bande de pâte, d'une machine à abaisser la pâte (1), sur un mandrin (11), auquel est pressée la bande de pâte, durant la phase initiale (38, 262, 39) de ses premiers tours d'enroulement (n), par un ou plusieurs rouleau(x) ou cylindre(s) de guidage (9a, 9b), qui sont à nouveau éloignés du mandrin (11) pour la phase suivante (39, 40, 41, 42, 43, 44) de son enroulement complet, caractérisé en ce que le mandrin (11) est tourné lentement (W2) pendant la phase initiale, et rapidement (W1) durant la phase d'achèvement, la vitesse de rotation (W2) du mandrin (11) correspondant à la vitesse d'une bande de transport (5b) de la machine à abaisser la pâte (1), et la vitesse de la bande de transport (5b) étant commutée sur la valeur lente, durant la phase initiale (38, 262, 39), et sur la valeur rapide, durant la phase d'achèvement (39, 40, 41, 42, 43, 44).

2. Procédé selon la revendication 1, caractérisé en ce que la bande de pâte est transférée directement de la bande de transport (5b) de la machine à abaisser la pâte (1) sur le mandrin (11).

3. Procédé selon la revendication 2, caractérisé en ce que le mandrin (11), dans la phase initiale et la phase d'achèvement (38 à 44), est amené dans une position (figure 3), dans laquelle il repose sur la bande de pâte et/ou la bande de transport (5b) de la machine à abaisser la pâte (1), en pouvant être entrainé en rotation par celles-ci.

4. Procédé selon l'une des revendications précédentes, caractérisé en ce que la vitesse de rotation lente (W2) du mandrin (11) se situe dans une plage allant d'un dixième à la moitié de sa vitesse de rotation plus rapide (W1).

5. Procédé selon l'une des revendications précédentes, la bande de pâte étant enroulée à partir d'une machine à abaisser la pâte (1) présentant des cylindres de pression (4) opposés, le dernier passage de la bande de pâte à travers l'interstice (s) des cylindres de pression (4) étant détecté (Li) pour mettre en place le mandrin (11) et/ou les rouleaux de guidage, dans une position de travail (figure 3), et le mandrin (11) et/ou les rouleaux de guidage (9a, 9b) étant couplés, quant à leur rotation, avec l'entraînement de la bande de transport (M2, 23), caractérisé en ce qu'avec la détection de la dernière opération d'abaissement (37) de la bande de pâte, on démarre un premier intervalle de temps (T1) réglé, que met la bande de pâte pour atteindre le mandrin (11), et qu'après écoulement (38) du premier intervalle de temps (T1), l'entraînement (M2) de la bande de transport est commuté sur la vitesse de rotation lente (W2) correspondant à la phase initiale (38, 39), pour la durée d'un second intervalle de temps (T2).

6. Procédé selon la revendication 5, caractérisé en ce qu'après l'écoulement (39) du second intervalle de temps (T2), l'entraînement (M2) de la bande de transport est commuté sur la vitesse de rotation rapide (W1) correspondant à la phase d'enroulement et d'achèvement (39 à 44), et/ou les rouleaux de guidage (9a, 9b) sont transférés de leur position de travail (figure 3), dans une position de repos (figure 2) éloignée du mandrin (11).

7. Procédé selon la revendication 5 ou la revendication 6, caractérisé par un troisième intervalle de temps (T3) démarré après écoulement (39) du second intervalle de temps (T2), après écoulement (44) duquel, le mécanisme d'entraînement (M2) de la bande de transport est stoppé (45), et/ou la largeur initiale de l'interstice (s) entre les cylindres de pression (4) est réglée (46).

8. Dispositif pour l'enroulement d'une bande de pâte, d'une machine à abaisser la pâte (1), sur un mandrin (11) monté de manière amovible, comprenant un carter de support (7) susceptible d'être adjoint à l'extrémité d'une bande de transport (5b) de la machine à abaisser la pâte (1), un dispositif de réception de mandrin (10) monté au carter de support (7) et comportant des éléments de réception, par exemple des évidements (17, 18) dans des plaques de réception (10) opposées, dans lesquels le mandrin (11) est logé librement tournant (28), l'appareil comprenant également un ou plusieurs rouleau(x) de guidage (9a, 9b), qui est ou sont logé(s) dans un support de déplacement également agencé au carter de support (7), et qui peut ou peuvent être amené(s), au moyen du support de déplacement, dans une position de repos (figure 2) éloignée du mandrin (11), ou dans une position de travail (figure 3) pour appliquer la bande de pâte autour du mandrin (11), caractérisé en ce que le mandrin (11), tout au moins lorsque le ou les rouleau(x) de guidage (9a, 9b) se trouve(nt) dans la position de travail (figure 3), est logé en reposant sur la bande de pâte, qui arrive sur la bande de transport (5b) de la machine à abaisser la pâte (1).

9. Dispositif selon la revendication 8, caractérisé en ce que le support de déplacement présente deux flasques de palier (8), qui sont articulés sur des côtés opposés, portent entre-eux, susceptibles d'être tournés, les rouleaux de guidage (9a, 9b), et qui pour leur pivotement (8a) dans la position de travail ou de repos, sont couplés avec un agencement de pivotement (13, 14, 15) entraîné (M1) par moteur.

10. Dispositif selon la revendication 9, caractérisé en ce que le dispositif de pivotement présente un disque d'excentrique (13) et un poussoir (15) susceptible d'être déplacé longitudinalement par ce disque, qui est relié avec le flasque de palier (8) pour le pivotement (8a).

11. Dispositif selon la revendication 10, caractérisé par un transmetteur de position (19) couplé avec le disque d'excentrique (13) et/ou réalisé d'un seul tenant avec celui-ci, le transmetteur de position comportant des objets de palpage (20) susceptibles d'être détectés par des interrupteurs de position (S1, S2) pour la position de travail et la position de repos (figure 2, figure 3), qui sont agencés de manière stationnaire.

12. Dispositif selon l'une des revendications 8 à 11, comportant un système de commande (24), qui, après la saisie de la dernière phase d'abaissement (37) de la pâte, actionne un entraînement (M1) amenant le mandrin (11) et/ou les rouleaux de guidage (9a, 9b) dans leur position de travail et de repos, caractérisé en ce que le système de commande (24) génère un premier signal et/ou un second signal de sortie pour l'entraînement (M2) de la bande de transport, pour commuter celui-ci d'une vitesse de transport élevée à une faible vitesse de transport (W1, W2) et inversement, et/ou pour le mettre en marche ou l'arrêter.

13. Dispositif selon la revendication 12, caractérisé en ce que le système de commande (24) génère un signal de sortie pour l'entraînement (M3) destiné au réglage de l'interstice (s) de cylindres de pression (4) opposés de la machine à abaisser la pâte (1), afin de ramener (46) cet agencement dans une position initiale.

14. Dispositif selon la revendication 12 ou 13, caractérisé en ce que le système de commande (24) présente un premier module d'horloge (261), qui engendre un intervalle de temps (T1) correspondant au temps entre la dernière phase d'abaissement de pâte (37) et le début de la prise en charge de la bande de pâte par le mandrin (11), ainsi qu'un second module d'horloge (262), qui engendre un intervalle de temps (T2) correspondant au temps entre le début de la prise en charge de la bande de pâte (38) et le déplacement (40, 41) des rouleaux de guidage (9a, 9b), de leur position de travail (figure 3), dans leur position de repos (figure 2).

15. Dispositif selon la revendication 14, caractérisé par un troisième module d'horloge (263) pour le système de commande (24), pour l'engendrement d'un intervalle de temps (T3) correspondant au temps entre la fin (44) de la dernière phase d'abaissement de pâte (37) et l'achèvement de l'opération d'enroulement sur le mandrin (11), afin, après cet intervalle de temps (T3), de commuter ou d'arrêter (45) l'entraînement de la bande de transport, et/ou d'engendrer (46) le signal de sortie selon la revendication 13.

16. Dispositif selon les revendications 12, 13, 14 ou 15, caractérisé en ce que le système de commande (24) est relié avec un détecteur (S3) pour le mandrin (11), dans le dispositif d'enroulement (6).

17. Dispositif selon l'une des revendications 8 à 16, employé pour la mise en oeuvre du procédé selon l'une des revendications 1 à 7.
